# EUROPÄISCHE PATENTSCHRIFT

(11) **EP 0 813 130 B1**
(45) Veröffentlichungstag und Bekanntmachung des Hinweises auf die Patenterteilung: **04.09.2002**
(21) Anmeldenummer: 97109510.4
(22) Anmeldetag: 11.06.1997
(51) Int. Cl.: G05B 19/4065, G05B 19/409

(54) **Numerische Steuerung für Werkzeugmaschinen oder Roboter**
Numerical control for machine-tool or robot
Commande numérique pour machine-outil ou robot

(30) Priorität: 12.06.1996 DE 19623456
(43) Veröffentlichungstag der Anmeldung: 17.12.1997
(73) Patentinhaber: SIEMENS AKTIENGESELLSCHAFT, 80333 München (DE)
(72) Erfinder: Gose, Horst, Dipl.-Ing., 91056 Erlangen (DE); Rath, Günter, Dipl.-Ing., 91052 Erlangen (DE); Kaever, Michael, Dipl.-Ing., 52072 Aachen (DE); Ketteler, Georg, Dipl.-Ing., 52062 Aachen (DE); Weck, Manfred, Professor, 52074 Aachen (DE); Klocke, Fritz, Professor, 52134 Herzogenaurach (DE)

(56) Entgegenhaltungen:
- EP-A- 0 065 576
- EP-A- 0 612 992
- US-A- 5 414 632

## Beschreibung

Die Erfindung bezieht sich auf eine numerische Steuerung für Werkzeugmaschinen oder Roboter, wobei über die Tastatur eines Bediengeräts manuelle Eingaben für die Steuerung und über einen Bildschirm des Bediengeräts Ausgaben der Steuerung vornehmbar sind, wobei Fertigungsprozesse entsprechend vorgebbaren Teileprogrammen für die Steuerung automatisierbar sind und wobei einem Umsetzer das jeweilige Teileprogramm zur Satzdetektion zuleitbar ist.

Derartige Steuerungen sind beispielsweise aus der DE-OS 42 36 627 bekannt. Dabei werden über einen Umsetzer die jeweiligen Teileprogramme analysiert und jeweils beim Auftreten spezieller Kennungen in den Sätzen der Teileprogramme Hilfsfunktionen über eine Anpaßsteuerung ausgelöst.

Von Automatisierungssystemen in der Fertigungstechnik werden neben der Grundfunktionalität "hochdynamische programmgesteuerte Werkstückbearbeitung" zunehmend auch qualitätssichernde Leistungen in den Bereichen der Fertigungsführung und Fertigungsprozeßüberwachung gefordert. Dabei gibt es zwar bereits Zusatzgeräte zur Durchführung dieser Funktionen, jedoch ist deren Einsatz mit zusätzlichen Kosten verbunden, und ferner können diese Einrichtungen nicht ohne weiteres alle im Prozeß vorliegenden Informationen automatisch übernehmen, insbesondere wenn es um NC-interne Steuer- und Ablaufinformationen geht.

Aufgabe der Erfindung ist es, eine numerische Steuerung der eingangs genannten Art so auszubilden, daß ohne unbedingt erforderliche additive Sensorik eine steuerungsintegrierte Fertigungsprozeßüberwachung bezüglich Kriterien wie Kollision, Anschnitt, Überlast, Werkzeugbruch oder Werkzeugverschleiß ermöglicht ist.

Gemäß der Erfindung wird diese Aufgabe dadurch gelöst, daß mittels des Umsetzers das Teileprogramm satzweise auf das Auftreten von Werkzeugkennungen abfragbar ist, daß dadurch jeweils beim Detektieren eines Werkzeugs unter Berücksichtigung aller dieses Werkzeug betreffende bislang vorliegenden Daten aus einer an den Umsetzer angeschlossenen Überwachungsmethoden-Datenbank dem Bediener am Bediengerät die auf Basis der aktuell vorhandenen Daten und vom Bediener ergänzbarer Parameter möglichen Überwachungsmethoden für dieses Werkzeug anzeigbar sind, von denen der Bediener jeweils eine oder mehrere parallel laufende auswählt und akzeptiert, woraufhin nach Vergabe von Überwachungsmethoden für alle Werkzeuge der Fertigungsprozeß auslösbar ist, wobei alle dabei auftretenden für mögliche Überwachungsmethoden geeignete Prozeßgrößen, wie Momente ,Achs- und Spindelströme, Drehzahlen und Lagewerte direkt aus der Steuerung der Datenbasis ergänzend zuleitbar sind.

Eine erste vorteilhafte Ausbildung der Erfindung ist dadurch gekennzeichnet, daß die Überwachungsmethoden jeweils für einzelne Überwachungskriterien anzeigbar sind. Damit wird eine besondere übersichtliche Anzeige für den Bediener ermöglicht.

Auch die Möglichkeit, die Überwachungsmethoden werkzeugbezogen und/oder programmbezogen und/oder satzbezogen zu vergeben, ermöglicht eine einfache Selektion der Bedienhandlungen.

Wenn sich eine akzeptierte Überwachungsmethode als vorteilhaft im Betrieb erwiesen hat, ist es sinnvoll, daß diese Überwachungsmethoden vom Bediener in die Überwachungsmethoden-Datenbank einspeicherbar ist.

Dadurch, daß der Bedienerzugriff hierarchisch staffelbar ist, kann sichergestellt werden, daß die Eingriffe der Bediener je nach deren Qualifikation erfolgen.

Wenngleich für die Erfindung wesentlich ist, daß die internen Daten aus der numerischen Steuerung fortlaufend zur Ergänzung der Datenbasis verwendet werden, kann es dennoch für spezielle Prozeßgrößen, beispielsweise Temperatur oder Geräusch, zweckmäßig sein, diese dann von externer Sensorik erfaßten Prozeßgrößen der Datenbasis ergänzend zuzuleiten.

Im Rahmen einer hohen Integration aller Komponenten ist es möglich, daß der Umsetzer integraler Bestandteil der Steuerung ist.

Ein Ausführungsbeispiel der Erfindung ist in der Zeichnung dargestellt und wird im folgenden näher erläutert. Dabei zeigen:
- FIG 1: ein Blockschaltbild der Steuerung und
- FIG 2: ein Menü für Bedienhandlungen.

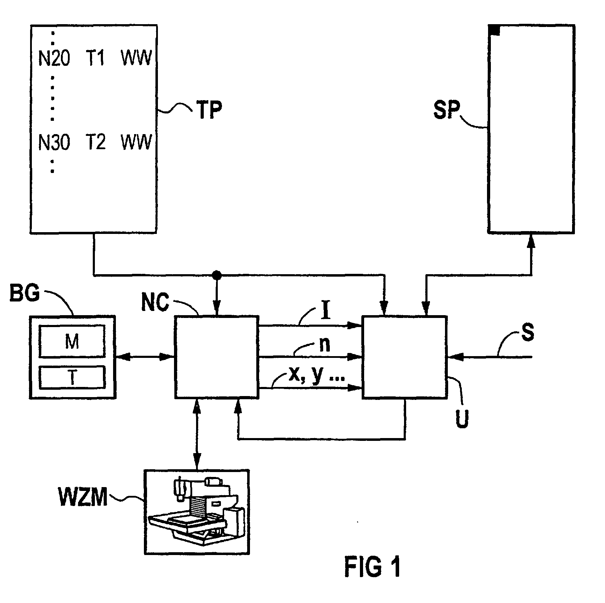

In der Darstellung gemäß FIG 1 ist eine numerische Steuerung NC gezeigt, der Informationen eines Teileprogrammes TP satzweise zugeführt werden können, um einen Bearbeitungsvorgang automatisiert auf einer mit der numerischen Steuerung NC verbundenen Werkzeugmaschine WZM auszulösen. Ferner ist die numerische Steuerung NC für einen Dialogbetrieb mit einem Bediener mit einem Bediengerät BG ausgestattet ist, das einen Monitor M und eine Tastatur T aufweist, die jeweils nur symbolhaft als Blöcke dargestellt sind.

Die numerische Steuerung NC möge dabei bereits die Antriebsregelung für die Werkzeugmaschine WZM beinhalten, so daß der numerischen Steuerung NC auch die beim Betrieb vorliegende Prozeßgrößen wie Moment (als Strom I), Drehzahl n sowie Lage x, y ... entnehmbar sind. Die Prozeßgrößen werden an einen Umsetzer U geleitet. Zusätzlich können Sensorsignale s (Temperatur, Geräusch etc.) als weitere Prozeßgrößen den Umsetzer U mitgeteilt werden.

Wesentlich für die Erfindung ist es nun, daß die Informationen des jeweiligen Teileprogramms TP vom Umsetzer U satzweise dahingehend analysiert wird, ob, wann und wo jeweils ein neues Werkzeug im Teileprogramm TP zum Einsatz kommt. Im Ausführungsbeispiel sei dabei angenommen, daß in einem Satz N20 ein neues Werkzeug T1 im Rahmen eines Werkzeugwechsels WW eingesetzt wird.

Angenommen, es handelt sich dabei um einen Standard-Bohrer mit gegebenem Durchmesser, wäre damit seine Werkzeugklasse geklärt und entsprechend den vorgegebenen Werten für Geometrie, materialbezogener Schnittleistung und Standleistung könnte der Umsetzer U aus einem Speicher SP, in dem alle möglichen Überwachungsmethoden für alle möglichen Werkzeuge abgelegt sind, diejenigen Überwachungsmethoden dem Bediener über den Monitor M des Bediengerätes BG anbieten, die für das Werkzeug T1 möglich sind.

Wenn jedoch für ein Werkzeug T2, beispielsweise ein Fräser, der in einem Satz N30 zum Werkzeugwechsel ansteht, detailliertere werkzeugbezogene Überwachungdaten im Speicher SP vorliegen, können dem Bediener von vornherein besser zugeschnittene Überwachungsmethoden per Menü angeboten werden.

Sofern vom Bediener, wie im folgenden noch geschildert, eine Überwachungsmethode ausgewählt worden ist, kann der eigentliche Fertigungsprozeß erfolgen, wobei vom Umsetzer U Rückwirkungen, insbesondere regelnder Natur auf die numerische Steuerung NC erfolgen.

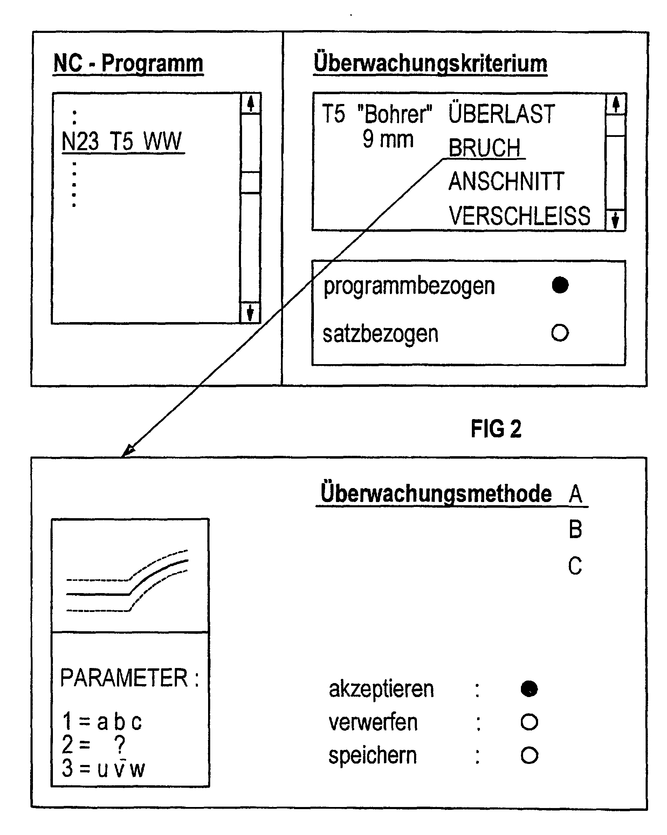

In der Darstellung gemäß FIG 2 wird die für die Erfindung wesentliche Menüführung für den Bediener in wesentlichen Zügen gezeigt. Dabei sei angenommen, daß ein NC-Programm erstmals als Teileprogramm zum Einsatz kommen soll.

Bei der Analyse des Teileprogramms TP erfährt der Bediener, daß in einem Satz N23 ein Werkzeug T5 eingewechselt werden soll. Aus der Datenbasis ist dem Umsetzer nun bekannt, daß es sich bei diesem Werkzeug um einen Bohrer von 9 mm handelt. Vom Bediener können nun für die verschiedenen möglichen Überwachungskriterien "Überlast", "Bruch", "Anschnitt" oder "Verschleiß" die jeweiligen Überwachungsmethoden in einem weiteren Menü angefordert werden, das auf dem gleichen Bildschirmbild, einem Teilfensterbild oder einem anderen Bildschirmbild aufschlagbar ist. Dabei kann vom Bediener auch vorgegeben werden, ob die Überwachungsmethoden zu diesen Überwachungskriterien programmbezogen (werkzeugbezogen) und/oder satzbezogen erfolgen sollen. Während beim programmbezogenen Überwachen automatisiert durchgängig gleiche Methoden verwendet werden, kann beim satzbezogenen Überwachen eine wesentlich anspruchsvollere Überwachungsstrategie erfolgen, die jedoch naturgemäß auch einen wesentlich tieferen Einblick des Bedieners in das Geschehen erfordert.

In diesem Zusammenhang kann darauf hingewiesen werden, daß die Art der Bedienhandlungen die von einem Bediener überhaupt ausgelöst werden können, durch hierarchische Zugriffserlaubnisse vergeben werden kann. Dazu können beispielsweise spezielle Schlüsselschalter verwendet werden, mit denen der Bediener die Steuerung aktiviert, wie sich diese seit langem bereits bewährt haben.

Nun jedoch weiter zur Auswahl der Überwachungsmethoden. Zunächst wählt der Bediener jeweils ein Überwachungskriterium aus. Im Ausführungsbeispiel möge durch Laufbalkenbetätigung das Überwachungskriterium "Bruch" gewählt worden sein. Wie durch einen Pfeil angedeutet, wird dann seitens des Umsetzers U anhand der im Speicher SP bislang abgelegten Daten für das Werkzeug T5 ein Menü von bis dato möglichen Überwachungsmethoden dem Bediener angeboten. Sinnvoll ist es dabei, den Bediener zunächst diejenige Überwachungsmethode anzubieten, die ohne oder mnit wenigen weiteren Eingaben bereits möglich ist und dann anspruchsvollere Methoden vorzuschlagen, bei denen der Bediener beispielsweise durch Eingabe zusätzlicher Angaben bis zu Expertenwissen diese Methode komplettieren kann.

Beim Ausführungsbeispiel sei dabei eine Überwachungsmethode A mit mitlaufenden Schwellen angenommen, wobei bereits zwei Parameter 1 und 3 als "abc" und "uvw" völlig komplett sind und wobei ein weiterer Parameter 2 vom Bediener unbedingt zu vervollständigen ist. Der Bediener muß dies tun und kann aber auch die Parameter 1 und 2 variieren. Dann wird er die Überwachungsmethode A akzeptieren, was im Ausführungsbeispiel durch ein ausgefülltes Kreisfeld angedeutet ist. Selbstverständlich kann sich der Bediener auch die anderen möglichen Überwachungsmethoden zur Verfügung stellen lassen, im Ausführungsbeispiel Überwachungsmethoden B oder C.

Wenn zu allen erforderlichen oder gewünschten Überwachungskriterien jeweils die Überwachungsmethoden festgelegt worden sind, kann das Teileprogramm TP gestartet werden. Bereits beim Produzieren eines ersten Teils wird eine Fertigungsprozeßüberwachung sichergestellt. Während des Fertigungsprozesses anfallende Daten werden jedoch gleich registriert und verbreitern die Datenbasis zum künftigen Abrufen der einzelnen Überwachungsmethoden.

Wenn sich eine Überwachungsmethode im Betrieb als sehr geeignet erwiesen hat, kann diese selbstverständlich als ständige Überwachungsmethode einer Überwachungsliste des jeweiligen Teileprogramms zugeordnet werden.

Zusammenfassend kann man feststellen, daß durch die Erfindung eine steuerungsintegrierte Fertigungsüberwachung und Fertigungsprozeßführung mit folgenden äußerst positiven Merkmalen geschaffen worden ist:
a) Steuerungsintegriertes Benutzer- und Bedienkonzept mit automatisiertem Generier- und Ladevorgang von Überwachungslisten,
b) werkzeugbezogene Überwachung vom ersten Werkstück an,
c) benutzergerechte Anwendermodi, z.B. "Basic", "Standard", "Experte" die im Menübaum steuer- und verriegelbar sind,
d) steuerungsintegrierte Fertigungsprozeßüberwachung ausschließlich mit "On-board"-Informationen ohne additive Sensorik oder Zusatzhardware,
e) offen für Erweiterung durch additive Sensorik, additive Überwachungsmethoden, integrierbar in das Gesamtsystem,
f) Daten- und Relisierungsbasis für Funktionen der Fertigungsprozeßüberwachung.

## Patentansprüche

1. Numerische Steuerung für Werkzeugmaschinen oder Roboter, wobei über die Tastatur eines Bediengeräts manuelle Eingaben für die Steuerung und über einen Bildschirm des Bediengeräts Ausgaben der Steuerung vornehmbar sind, wobei Fertigungsprozesse entsprechend vorgebbaren Teileprogrammen für die Steuerung automatisierbar sind und wobei einem Umsetzer das jeweilige Teileprogramm zur Satzdetektion zuleitbar ist, **dadurch gekennzeichnet, daß** mittels des Umsetzers (U) das Teileprogramm (TP) satzweise auf das Auftreten von Werkzeugkennungen (T1,T2,T5) abfragbar ist, daß dadurch jeweils beim Detektieren eines Werkzeugs unter Berücksichtigung aller dieses Werkzeug betreffenden bislang vorliegenden Daten aus einer an den Umsetzer (U) angeschlossenen Überwachungsmethoden-Datenbank (SP) dem Bediener am Bediengerät (BG) die auf Basis der aktuell vorhandenen Daten und vom Bediener ergänzbarer Parameter möglichen Überwachungsmethoden (A,B,C) für dieses Werkzeug anzeigbar sind, von denen der Bediener jeweils eine oder mehrere parallel laufende auswählt und akzeptiert, woraufhin nach Vergabe von Überwachungsmethoden für alle Werkzeuge der Fertigungsprozeß auslösbar ist, wobei alle dabei auftretenden, für mögliche Überwachungsmethoden (A,B,C) geeigneten Prozeßgrößen, wie Momente, Achs- und Spindelströme (I), Drehzahlen (n) und Lagewerte (x, y) direkt aus der Steuerung der Datenbasis ergänzend zuleitbar sind.

2. Numerische Steuerung nach Anspruch 1, **dadurch gekennzeichnet, daß** die Überwachungsmethoden (A,B,C) jeweils für einzelne Überwachungskriterien anzeigbar sind.

3. Numerische Steuerung nach Anspruch 1 oder 2, **dadurch gekennzeichnet, daß** die Überwachungsmethoden (A,B,C) werkzeugbezogen und/oder programmbezogen und/oder satzbezogen vergebbar sind.

4. Numerische Steuerung nach einem der vorstehenden Ansprüche, **dadurch gekennzeichnet, daß** akzeptierte und bewährte Überwachungsmethoden (A,B,C) vom Bediener in die Überwachungsmethoden-Datenbank (SP) einspeicherbar sind.

5. Numerische Steuerung nach einem der vorstehenden Ansprüche, **dadurch gekennzeichnet, daß** der Bedienerzugriff hierarchisch staffelbar ist.

6. Numerische Steuerung nach einem der vorstehenden Ansprüche, **dadurch gekennzeichnet, daß** zusätzlich auch von externer Sensorik erfaßte Prozeßgrößen (S) der Datenbasis ergänzend zuleitbar sind.

7. Numerische Steuerung nach einem der vorstehenden Ansprüche, **dadurch gekennzeichnet, daß** der Umsetzer (U) integraler Bestandteil der Steuerung (NC) ist.

## Claims

1. Numerical control for machine tools or robots, whereby it is possible, via the keyboard of an operator panel, to make manual inputs to the control system and to obtain, via a display screen of the operator panel, outputs from the control system, whereby it is possible to automate production processes corresponding to pre-settable part programs for the control system and whereby it is possible to supply the relevant part program to a converter for record detection, **characterised in that** by means of the converter (U) the part program (TP) can be interrogated record-by-record for the occurrence of tool labels (T1, T2, T5), that by this means when detecting a tool taking account of all the data relevant to this tool available so far from a monitoring method database (SP) connected to the converter (U) the possible monitoring methods (A, B, C) for this tool on the basis of the current existing data and on parameters that can be supplemented by the operator, can be displayed to the operator on the operator panel (BG), from which the operator selects and accepts one or more running in parallel, whereupon, after entry of monitoring methods for all tools, the production process can be initiated, whereby all the process variables suitable for possible monitoring methods (A, B, C), such as torques, axis and spindle currents (I), speeds (n) and position values (x, y) can be additionally fed to the database directly from the control system.

2. Numerical control according to Claim 1, **characterised in that** the monitoring methods (A, B, C) can be displayed in each case for individual monitoring criteria.

3. Numerical control according to Claim 1 or 2, **characterised in that** the monitoring methods (A, B, C) can be specified on a tool-related and/or program-related and/or record-related basis.

4. Numerical control according to one of the preceding claims, **characterised in that** the accepted and proven monitoring methods (A,B, C) can be saved in the monitoring methods database (SP) by the operator.

5. Numerical control according to one of the preceding claims, **characterised in that** operator access can be hierarchically graded.

6. Numerical control according to one of the preceding claims, **characterised in that** additional process variables (S) also measured by external sensors can be fed to the database as a supplement.

7. Numerical control according to one of the preceding claims, **characterised in that** the converter (U) is an integral part of the control system (NC).

## Revendications

1. Commande numérique pour des machines-outils ou des robots, dans laquelle des entrées manuelles peuvent être effectuées via un clavier d'un appareil de contrôle en vue de la commande et des sorties de la commande peuvent être effectuées via un écran de l'appareil de contrôle, dans laquelle des processus de fabrication peuvent être automatisés en fonction de programmes de pièces pouvant être prescrits en vue de la commande et dans laquelle le programme de pièce respectif peut être envoyé à un convertisseur en vue de la détection de bloc, **caractérisée par le fait que** le programme de pièce (TP) peut être interrogé bloc par bloc au moyen du convertisseur (U) pour connaître l'apparition d'identificateurs d'outils (T1, T2, T5) et que, à chaque détection d'un outil et en tenant compte de toutes les données présentes jusqu'alors et concernant cet outil, les méthodes de surveillance (A, B, C) possibles pour cet outil en fonction des données actuellement présentes et de paramètres pouvant être complétés par l'opérateur peuvent être affichées pour l'opérateur sur l'appareil de contrôle (BG) à partir d'une base de données de méthodes de surveillance (SP) raccordée au convertisseur (U), l'opérateur sélectionnant et acceptant parmi ces méthodes de surveillance possibles une ou plusieurs méthodes s'exécutant en parallèle, à la suite de quoi le processus de fabrication peut être déclenché après la prescription des méthodes de surveillance pour tous les outils, toutes les grandeurs de processus qui apparaissent alors et qui conviennent à des méthodes de surveillance possibles (A, B, C), tels les couples, les courants d'axes et de broches (I), les vitesses de rotation (n) et les valeurs de position (x, y), pouvant alors être envoyées directement, en complément, de la commande à la base de données.

2. Commande numérique selon la revendication 1, **caractérisée par le fait que** les méthodes de surveillance (A, B, C) peuvent être affichées respectivement pour différents critères de surveillance.

3. Commandé numérique selon la revendication 1 ou 2, **caractérisée par le fait que** les méthodes de surveillance (A, B, C) peuvent être prescrites en rapport à l'outil et/ou en rapport au programme et/ou en rapport au bloc.

4. Commande numérique selon l'une des revendications précédentes, **caractérisée par le fait que** des méthodes de surveillance (A, B, C) acceptées et éprouvées peuvent être enregistrées par l'opérateur dans la base de données de méthodes de surveillance (SP).

5. Commande numérique selon l'une des revendications précédentes, **caractérisée par le fait que** l'accès de l'opérateur peut être échelonné de façon hiérarchique.

6. Commande numérique selon l'une des revendications précédentes, **caractérisée par le fait que** des grandeurs de processus (S) détectées par une unité sensorielle externe peuvent aussi être envoyées en supplément à la base de données.

7. Commande numérique selon l'une des revendications précédentes, **caractérisée par le fait que** le convertisseur (U) est une partie intégrante de la commande (NC).
